(19) Europäisches Patentamt
European Patent Office
Office européen des brevets

(11) **EP 3 980 793 B1**

(12) **EUROPÄISCHE PATENTSCHRIFT**

(45) Veröffentlichungstag und Bekanntmachung des Hinweises auf die Patenterteilung:
**05.07.2023  Patentblatt 2023/27**

(21) Anmeldenummer: **20727214.7**

(22) Anmeldetag: **15.05.2020**

(51) Internationale Patentklassifikation (IPC):
***G01P 15/125*** *(2006.01)*     ***G01P 15/08*** *(2006.01)*

(52) Gemeinsame Patentklassifikation (CPC):
**G01P 15/125;** G01P 2015/0814

(86) Internationale Anmeldenummer:
**PCT/EP2020/063722**

(87) Internationale Veröffentlichungsnummer:
**WO 2020/244910 (10.12.2020 Gazette 2020/50)**

(54) **BESCHLEUNIGUNGSMESSVORRICHTUNG MIT VERBESSERTER BIASSTABILITÄT**

ACCELEROMETER DEVICE WITH IMPROVED BIAS STABILITY

DISPOSITIF DE MESURE D'ACCÉLÉRATION AYANT UNE STABILITÉ DE POLARISATION AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2019   DE 102019114996**

(43) Veröffentlichungstag der Anmeldung:
**13.04.2022   Patentblatt 2022/15**

(73) Patentinhaber: **Northrop Grumman LITEF GmbH 79115 Freiburg (DE)**

(72) Erfinder:
• **KÖNIG, Stefan 79219 Staufen (DE)**
• **RUF, Markus 79183 Waldkirch (DE)**

(74) Vertreter: **Müller Hoffmann & Partner Patentanwälte mbB St.-Martin-Strasse 58 81541 München (DE)**

(56) Entgegenhaltungen:
WO-A1-2015/052487     WO-A1-2016/120319
JP-A- 2000 180 180     JP-A- 2017 523 396
US-A1- 2005 001 275

**Beschreibung**

Die vorliegende Erfindung betrifft Vorrichtungen und Verfahren zum Messen einer Beschleunigung, mit einer hohen Stabilität eines Bias der Messvorrichtung.

In verschiedenen Anwendungen kommen elektrische Beschleunigungssensoren zum Messen von Beschleunigungen zum Einsatz. Dabei wird häufig eine Massenkomponente mittels Federelementen über einem Substrat gelagert, deren Auslenkung bei einer anliegenden Beschleunigung gemessen wird. Zusätzlich zu den von den Federelementen ausgeübten Kräften können auch verschiedene elektrostatische Kräfte auf die Sensormasse wirken. Insbesondere können neben der für das Ansteuern der Sensormasse und/oder Auslesen der wirkenden Beschleunigung nötigen Elektroden auch sogenannte Trimmelektroden vorhanden sein, die durch Einstellung der zwischen den Trimmelektroden anliegenden Spannung dazu dienen, die effektive Federkonstante des Systems zu beeinflussen. So kann durch die Trimmelektroden eine elektrostatische Kraft auf die Sensormasse ausgeübt werden, die der Federkraft entgegenwirkt und diese in erster Näherung (d.h. für kleine Auslenkungen der Sensormasse) kompensiert. Die Bewegung der Sensormasse verläuft dann so, als wäre effektiv keine rückstellende Feder vorhanden.

Die WO 2015/052487 A1 offenbart einen Beschleunigungssensor, in dem die Sensormasse in eine Position gebracht werden kann, in der eine elektrostatische Federkraft mit einer mechanischen Federkraft übereinstimmt.

Die WO 2016/120319 A1 offenbart einen Beschleunigungssensor, in dem eine Trimmspannung angelegt werden kann, um auf die Sensormasse wirkende Federkräfte zu kompensieren. Dazu wird die Sensormasse in einer neutralen Position mittels der anliegenden Spannungen gehalten.

Die JP 2000/180180 A und die US 2005/0001275 A1 offenbaren den Einsatz von Trimmelektroden in Beschleunigungssensoren.

Aufgrund von Fertigungstoleranzen, Alterung oder Umwelteinflüssen wie etwa Temperaturschwankungen können die jeweiligen Subsysteme, die die verschiedenen auf die Sensormasse wirkenden Kräfte bewirken, unterschiedliche kräftefreie Lagen aufweisen. So kann z.B. die Auslenkung der Sensormasse, für die keine Federkraft auftritt, sich von der Auslenkung unterscheiden, für die von den Trimmelektroden und/oder den Ansteuer-/Ausleseelektroden keine elektrostatischen Kräfte ausgeübt werden. Dadurch kann es beim Betrieb des Beschleunigungssensors zu einer Vorspannung der Federelemente kommen, die von den Ansteuer-/Ausleseelektroden wahrgenommen wird und die das Messergebnis verfälschen kann. Dieser Bias der Messung muss für korrekte Ergebnisse korrigiert werden.

Es ist deshalb einerseits vorteilhaft, einen Beschleunigungssensor derart zu betreiben, dass ein Arbeitspunkt der Sensormasse, d.h. die Auslenkung der Sensormasse während des Betriebs, möglichst symmetrisch zum Aufbau der übrigen Sensorkomponenten ist, um den Bias zu reduzieren. Zudem ist es erstrebenswert, dass der Bias über längere Zeiträume konstant bleibt, um eine laufende Anpassung der durch den Bias notwendigen Korrekturen zu vermeiden.

Die Aufgabe der vorliegenden Erfindung ist deshalb, einen Beschleunigungssensor sowie ein Verfahren zu dessen Betrieb anzugeben, die es ermöglichen, den Beschleunigungssensor an einem Arbeitspunkt zu betreiben, an dem der Bias möglichst gering und möglichst stabil ist.

Diese Aufgabe wird durch den Gegenstand der unabhängigen Ansprüche gelöst.

Ein Beschleunigungssensor kann eine Sensormasse, die mittels Federelementen entlang einer Bewegungsachse beweglich über einem Substrat gelagert ist, erste Trimmelektroden, die mit der Sensormasse verbunden sind, und Sensorelektroden aufweisen, die mit der Sensormasse verbunden sind. Der Beschleunigungssensor kann zudem zweite Trimmelektroden, die mit dem Substrat verbunden sind und den ersten Trimmelektroden zugeordnet sind, und Detektionselektroden aufweisen, die mit dem Substrat verbunden und die den Sensorelektroden zugeordnet sind. Hierbei sind die Sensorelektroden und die Detektionselektroden geeignet, die Sensormasse entlang der Bewegungsachse auszulenken und die Auslenkung und eine erste elektrostatische Kraft zu messen, die von den Sensorelektroden und den Detektionselektroden auf die Sensormasse ausgeübt wird. Durch die Federelemente wird bei Auslenkung der Sensormasse entlang der Bewegungsachse eine Federkraft auf die Sensormasse erzeugt. Durch Anlegen einer elektrischen Trimmspannung zwischen den ersten Trimmelektroden und den zweiten Trimmelektroden wird eine zweite elektrostatische Kraft auf die Sensormasse erzeugt. Durch die Sensorelektroden und die Detektionselektroden wird für zumindest zwei verschiedene Trimmspannungen ein Zusammenhang zwischen der ersten elektrostatischen Kraft und der Auslenkung der Sensormasse bestimmt und daraus ein neutraler Punkt für die Auslenkung bestimmt, in der für die verschiedenen Trimmspannungen die jeweiligen ersten elektrostatischen Kräfte gleich sind. Die Auslenkung der Sensormasse wird dann von den Sensorelektroden und den Detektionselektroden bezüglich des neutralen Punkts eingestellt.

Die Sensormasse erfährt in einem derartigen Beschleunigungssensor drei Arten von Kräften. Über die Federelemente wirkt eine rückstellende Federkraft auf die Sensormasse. Die für das Ansteuern der Sensormasse und/oder Auslesen der wirkenden Beschleunigung vorgesehenen Sensor- und Detektionselektroden erzeugen eine erste elektrostatische Kraft, während die Trimmelektroden eine zweite elektrostatische Kraft erzeugen. Hierbei können die Auswirkungen der Federkraft und der zweiten elektrostatischen Kraft kombiniert als effektive Federkraft betrachtet werden, der die erste elektrostatische Kraft, die von dem Sensor ausgelesen wird, für eine Ruhelage der Sensormasse gleich sein muss.

Durch Variation der Trimmspannung, die zur zweiten elektrostatischen Kraft führt, ändert sich die Stärke dieser effektiven Federkraft. Die Variation der Trimmspannung führt deshalb in erster Ordnung, d.h. für kleine Auslenkungen, zu einer Variation der effektiv wahrgenommenen Federkonstante des kombinierten Systems aus Federelementen und Trimmelektroden.

Für eine bestimmte Trimmspannung, d.h. für eine bestimmte effektive Federkonstante, wird die Abhängigkeit der ersten elektrostatischen Kraft, d.h. der von den Detektionselektroden des Beschleunigungssensors detektierten Kraft, auf die Sensormasse, von der Auslenkung der Sensormasse bestimmt. Es wird also gemessen, welche Kraft zu welcher Auslenkung führt. Für kleine Auslenkungen um den mechanischen Ruhepunkt des Systems Federelemente-Sensormasse hat dieser Zusammenhang die Form einer Geraden, deren Steigung der effektiven Federkonstante entspricht.

Ändert man nun die Trimmspannung und führt die Messung des Zusammenhangs von effektiv gemessener Kraft und Auslenkung erneut durch, erhält man eine weitere Gerade mit einer anderen Steigung. Am Kreuzungspunkt der beiden Geraden liegt für die verschiedenen Trimmspannungen bei gleicher Auslenkung die gleiche zweite elektrostatische Kraft an. Tatsächlich schneiden sich in erster Näherung, d.h. für Auslenkungen in denen die von den Trimmelektroden erzeugte zweite elektrostatische Kraft linear mit der Auslenkung variiert, sämtliche für verschiedene Trimmspannungen bestimmten Geraden in einem einzelnen Punkt, der im Folgenden mit "neutraler Punkt" bezeichnet werden soll.

Dieser neutrale Punkt ist gegenüber Schwankungen in der angelegten Trimmspannung stabil, da derartige Schwankungen die auf die Sensormasse wirkende Kraft nicht beeinflussen. Ein im neutralen Punkt vorhandener Bias ist also gegenüber die Trimmelektroden betreffende Veränderungen stabilisiert.

Zudem ist der Bias im neutralen Punkt besonders gering, da die Sensormasse symmetrisch zur Sensorstruktur liegt. Dies lässt sich wie folgt verstehen. Bezeichnet man die Federkraft mit Ff, die erste elektrostatische Kraft mit Fd und die von den Trimmelektroden erzeugte zweite elektrostatische Kraft mit Ft, so gilt im Kräftegleichgewicht:

$$\mathrm{Fd} = -\,\mathrm{Ff} - \mathrm{Ft}$$

Am neutralen Punkt n gilt entsprechend der Definition des neutralen Punkts, dass für verschiedene Trimmspannungen U1 und U2 die erste elektrostatische Kraft gleich sein muss. Zudem hat die Sensormasse am neutralen Punkt eine bestimmte Auslenkung "n". Die von den Federelementen ausgeübte Kraft ist deshalb im neutralen Punkt für verschiedene Trimmspannungen ebenfalls gleich. Daraus folgt, dass auch die zweite elektrostatische Kraft für verschiedene Trimmspannungen gleich sein muss:

$$\mathrm{Fd(U1,n)} = \mathrm{Fd(U2,n)}; \; \mathrm{Ff(U1,n)} = \mathrm{Ff(U2,n)}; \; \Rightarrow \mathrm{Ft(U1,n)} = \mathrm{Ft(U2,n)}$$

Damit muss die Sensormasse im neutralen Punkt bezüglich der Trimmelektroden symmetrisch liegen, da ansonsten die Bedingung Ft(U1,n) = Ft(U2,n) nicht erfüllt sein kann. Sind die Trimmelektroden z.B. als Paarungen von Plattenkondensatoren angeordnet, so folgt sogar, dass die zweite elektrostatische Kraft am neutralen Punkt gleich null ist, da sich aufgrund der symmetrischen Anordnung alle Kräfte aufheben.

Es ist also möglich, den Beschleunigungssensor mit kleinem und relativ stabilem Bias zu betreiben, sobald die Sensormasse in eine dem neutralen Punkt benachbarte Ausgangslage oder sogar in den neutralen Punkt gebracht wurde.

Nach dem derartigen Einstellen der Auslenkung bezüglich des neutralen Punkts kann die Trimmspannung derart eingestellt werden, dass die zweite elektrostatische Kraft die Federkraft teilweise oder vollständig kompensiert. Der Zusammenhang zwischen der ersten elektrostatische Kraft und der Auslenkung wird in diesem Fall einer Waagrechten angenähert, d.h. für alle Auslenkungen tritt im Wesentlichen die gleiche effektive Kraft auf. Eine kleine Änderung der Position aus dem neutralen Punkt heraus führt also ebenso wie eine Änderung der Trimmspannung nur zu einer vernachlässigbaren Änderung der von den Sensor- und Detektionselektroden gemessenen Kraft und hierdurch des Bias. Die Stabilität des Bias wird also weiter erhöht.

Die Sensorelektroden und die Detektionselektroden können in erste Paarungen von Sensorelektroden und Detektionselektroden und zweite Paarungen von Sensorelektroden und Detektionselektroden aufgeteilt sein. Hierbei können die ersten Paarungen und die zweiten Paarungen entlang der Bewegungsachse an verschiedenen Positionen angeordnet sein und eine vorgegebene Spannung kann mit einem Tastverhältnis abwechselnd an die Sensorelektroden und Detektionselektroden der ersten Paarungen und die Sensorelektroden und Detektionselektroden der zweiten Paarungen angelegt werden. Durch die Änderung des Tastverhältnisses kann dann die erste elektrostatische Kraft geändert werden.

Durch die räumliche Auftrennung der Sensor- und Detektionselektroden entlang der Bewegungsachse lässt sich die erste elektrostatische Kraft durch den Wechsel des Anlegens einer einzelnen konstanten Spannung an die räumlich getrennten Elektrodenpaarungen variieren. Liegt das Tastverhältnis z.B. bei gleich ausgestalteten ersten und zweiten Elektrodenpaarungen bei 50/50, so wirkt keine erste elektrostatische Kraft. Bei einer Änderung des Tastverhältnisses in die eine Richtung, z.B. auf 70/30, wird sich eine erste elektrostatische Kraft in die eine Richtung der Bewegungsachse ausbilden, während bei Änderung in die andere Richtung, z.B. auf 30/70, die elektrostatische Kraft in die entgegengesetzte Richtung wirkt. Die Stärke der Kraft lässt sich also über die Anzahl der Beaufschlagung der einen Paarungen gegenüber der Beaufschlagung gegenüber den anderen Paarungen in einer bestimmten Zeiteinheit einstellen. Im Prinzip ermöglicht dies auch einen unsymmetrischen Aufbau der Paarungen, da sich stets ein Tastverhältnis finden lässt, für das sich eine gemittelte Kräftefreiheit einstellt. Es ist also möglich, die effektive bzw. zweite elektrostatische Kraft in einfacher Weise unter Verwendung einer einzigen vorgegebenen Spannung zu variieren, wodurch sich das Auffinden des neutralen Punkts vereinfacht.

Während die vorgegebene Spannung an die jeweiligen Sensorelektroden und Detektionselektroden angelegt ist, kann eine Kapazität der von den Sensorelektroden und Detektionselektroden gebildeten Kondensatoren bestimmt werden und die Auslenkung der Sensormasse kann über einen Kapazitätsunterschied zwischen den ersten Paarungen von Sensorelektroden und Detektionselektroden und den zweiten Paarungen von Sensorelektroden und Detektionselektroden bestimmt werden.

Der Zusammenhang zwischen der ersten elektrostatischen Kraft und der Auslenkung kann über den Zusammenhang zwischen dem anliegenden Tastverhältnis und dem Kapazitätsunterschied bestimmt werden.

Bei Anlegen der vorgegebenen Spannung an die jeweiligen Paarungen von Sensor- und Detektionselektroden kann der Zufluss von Ladung auf den von diesen Elektroden gebildeten Kondensator gemessen werden, z.B. über einen entsprechenden Verstärker. Da die angelegte Spannung bekannt ist, kann daraus die Gesamtkapazität der mit Spannung beaufschlagten Elektroden bestimmt werden. Da die Kapazität von der Entfernung der Elektroden voneinander abhängt, ist der Unterschied der Gesamtkapazitäten der beiden Paarungsgruppen ein Maß für die Auslenkung der Sensormasse. Eine entsprechende Kalibrierung erlaubt es also, aus der Messung der Kapazitäten eine Auslenkung abzuleiten.

Ebenso ist es aber auch möglich, den Zusammenhang zwischen der ersten elektrostatischen Kraft und der Auslenkung der Sensormasse direkt als Zusammenhang zwischen dem Tastverhältnis des Wechsels der Spannungsbeaufschlagung und dem Kapazitätsunterschied zu bestimmen. Der neutrale Punkt wird dann als bestimmter Kapazitätsunterschied aufgefasst, in dem für verschiedene Trimmspannungen das Tastverhältnis gleich ist.

Hierzu kann für jeweils eine Trimmspannung das Tastverhältnis verändert und für jedes Tastverhältnis der Kapazitätsunterschied bestimmt werden. Das Tastverhältnis, das nötig ist, um die Auslenkung in Richtung des neutralen Punkts einzustellen, wird derart eingestellt, dass für jede der verschiedenen Trimmspannungen der gleiche Kapazitätsunterschied angestrebt wird bzw. auftritt. Auf diese Weise kann die Auslenkung bezüglich des neutralen Punkts in einfacher Weise ohne die Notwendigkeit einer Kalibrierung oder Umrechnung der gemessenen Werte eingestellt werden.

An den ersten Trimmelektroden, den zweiten Trimmelektroden, den Sensorelektroden und/oder den Detektionselektroden anliegende Spannungen können durch einen Regelkreis automatisch derart eingestellt werden, dass die Auslenkung bezüglich des neutralen Punkts geregelt wird. Hierzu kann z.B. das Tastverhältnis derart geregelt werden, dass der Kapazitätsunterschied im neutralen Punkt erreicht wird. Der erforderliche Kapazitätsunterschied im neutralen Punkt kann dabei kontinuierlich durch eine Modulation der an den Trimmelektroden anliegenden Spannungen ermittelt werden. Dies ermöglicht eine automatische Nachführung der Sensormasse in Richtung des neutralen Punkts, auch wenn sich dieser im Laufe der Zeit oder aufgrund von Umwelteinflüssen verschieben sollte.

An den ersten Trimmelektroden und den zweiten Trimmelektroden anliegende Spannungen können durch einen anderen Regelkreis automatisch derart eingestellt werden, dass die zweite elektrostatische Kraft die Federkraft teilweise oder vollständig kompensiert. Dadurch wird gewährleistet, dass die Sensormasse am oder in der Nähe des neutralen Punkts auch bei sich im Laufe der Zeit oder aufgrund von Umwelteinflüssen ändernden Sensorparametern keiner (oder näherungsweise keiner) effektiven Federkraft unterliegt.

Das Einstellen der Sensormasse bezüglich des neutralen Punkts kann ein Annähern der Auslenkung der Sensormasse an den neutralen Punkt oder ein Einstellen der Auslenkung der Sensormasse auf den neutralen Punkt sein. Wie oben bereits erläutert erhöht dies die Biasstabilität.

Ein Verfahren zum Einstellen der Auslenkung der Sensormasse eines Beschleunigungssensors wie er oben beschrieben wurde kann umfassen: Bestimmen eines Zusammenhangs zwischen der ersten elektrostatischen Kraft und der Auslenkung der Sensormasse für zumindest zwei verschiedene Trimmspannungen; Bestimmen eines neutralen Punkts für die Auslenkung, in der für die verschiedenen Trimmspannungen die jeweiligen ersten elektrostatischen Kräfte gleich sind, aus den Zusammenhängen zwischen der ersten elektrostatischen Kraft und der Auslenkung der Sensormasse; und Einstellen der Auslenkung der Sensormasse bezüglich des neutralen Punkts.

Die Erfindung wird im Folgenden mit Bezug auf die Figuren beispielhaft beschrieben. Die Erfindung soll aber nicht auf die folgenden Beispiele eingeschränkt werden, sie ist vielmehr allein durch den Gegenstand der Ansprüche bestimmt. Es zeigt:

Fig. 1     eine schematisch Darstellung eines Beschleunigungssensors;

Fig. 2     eine schematische Darstellung der Abhängigkeit einer von einem Beschleunigungssensor gemessenen Kraft von der Auslenkung seiner Sensormasse bei verschiedenen Trimmspannungen;

Fig. 3     eine schematische Darstellung eines weiteren Beschleunigungssensors; und

Fig. 4     ein schematisches Ablaufdiagram eines Verfahrens zum Einstellen einer Auslenkung der Sensormasse eines Beschleunigungssensors auf eine Position mit stabilisiertem Bias.

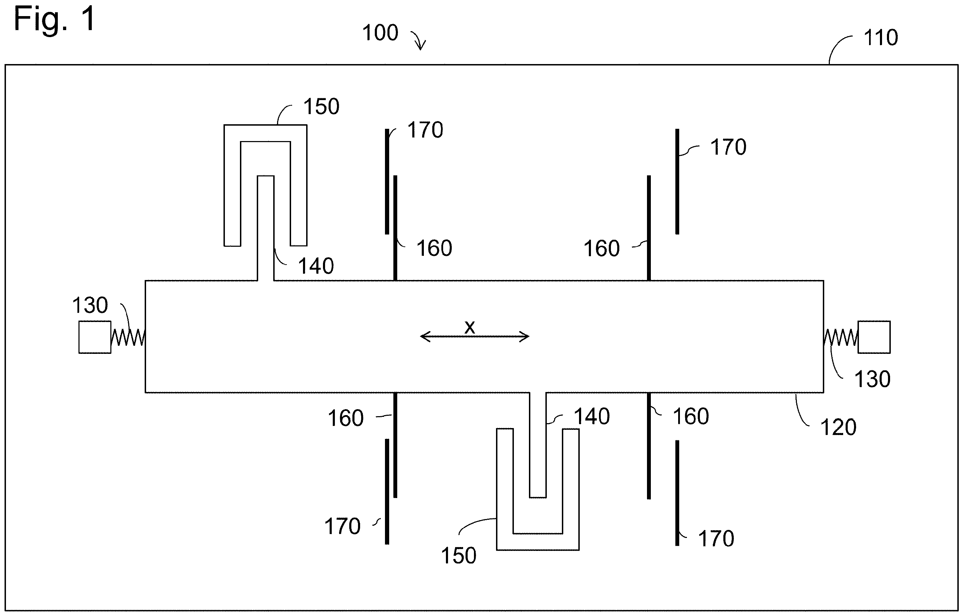

Die Fig. 1 zeigt eine schematische Darstellung eines Beschleunigungssensors 100.

Der Beschleunigungssensor 100 weist ein Substrat 110 auf. Über dem Substrat 110 ist eine Sensormasse 120 über Federelemente 130 entlang einer Bewegungsachse x beweglich gelagert. Die Federelemente 130 sind auf einer ersten Seite der Federelemente 130 fest mit dem Substrat 110 verbunden und auf einer zweiten Seite der Federelemente 130 fest mit der Sensormasse 120 verbunden. Die Federelemente 130 erlauben es der Sensormasse 120, entlang der Bewegungsachse x ausgelenkt zu werden. Zum Beispiel können die Federelemente 130 als Biege-Balkenfedern ausgebildet sein, die sich senkrecht zur Bewegungsachse x erstrecken und damit eine Bewegung allein entlang der Bewegungsachse x erlauben, wohingegen eine Bewegung senkrecht zur Bewegungsachse x nicht möglich ist. Die Federelemente 130 können aber auch jede andere Form aufweisen, die dazu führt, dass die Sensormasse 120 entlang der Bewegungsachse x ausgelenkt werden kann.

Erste Trimmelektroden 140 sind mit der Sensormasse 120 verbunden. Dabei sind die ersten Trimmelektroden 140 fest mit der Sensormasse 120 verbunden, z.B. können die Sensormasse 120 und die ersten Trimmelektroden 140 einstückig ausgebildet sein, d.h. die ersten Trimmelektroden 140 sind ein integraler Bestandteil der Sensormasse 120.

Zweite Trimmelektroden 150 sind mit dem Substrat 110 verbunden und den ersten Trimmelektroden 140 zugeordnet. Dabei sind die zweiten Trimmelektroden 150 fest mit dem Substrat 110 verbunden. Zum Beispiel können die zweiten Trimmelektroden 150 integrale Bestandteile des Substrats 110 sein.

Die Paarungen von ersten Trimmelektroden 140 und zweiten Trimmelektroden 150 sind derart ausgebildet, dass in einer bestimmten Lage der Sensormasse 120 keine von den ersten Trimmelektroden 140 und den zweiten Trimmelektroden 150 erzeugte Kraft auf die Sensormasse 120 wirkt. Bei Auslenkung aus dieser Lage entsteht jedoch eine elektrostatische Kraft Ft, die über die Trimmelektroden 140, 150 auf die Sensormasse 120 wirkt.

Die ersten Trimmelektroden 140 und die zweiten Trimmelektroden 150 müssen hierbei nicht symmetrisch an der Sensormasse 120 oder dem Substrat 110 angebracht sein. Zum Beispiel können sich sämtliche erste Trimmelektroden 140 auf einer Seite der Sensormasse 120 oder an einem Ende der Sensormasse 120 befinden.

Die Federelemente 130 erzeugen bei Auslenkung der Sensormasse 120 entlang der Bewegungsachse x eine Federkraft Ff, die die Sensormasse 120 zurück in eine Ausgangslage bewegt, in der sich die von den einzelnen Federelementen 130 erzeugten Kräfte kompensieren oder in der diese Kräfte verschwinden (mechanischer Nullpunkt). Gleichzeitig kann durch Anlegen einer elektrischen Trimmspannung zwischen den ersten Trimmelektroden 140 und den zweiten Trimmelektroden 150 die elektrostatische Kraft Ft auf die Sensormasse 120 erzeugt werden, die sich der Federkraft Ff zu einer effektiven Federkraft aufaddiert.

Es ist also möglich, über eine Trimmspannung, die zwischen den ersten Trimmelektroden 140 und den zweiten Trimmelektroden 150 anliegt, die Federhärte bzw. -steifigkeit des Beschleunigungssensors 100 frei einzustellen. Dadurch kann zum Beispiel erreicht werden, dass sich die Federkraft Ff und die elektrostatische Kraft Ft vollständig kompensieren, so dass bei Auslenkung der Sensormasse 120 keine rückstellende Kraft mehr vorhanden ist. Die elektrostatische Kraft Ft kann aber auch die Federkraft Ff überkompensieren, d.h. übersteigen, so dass bei einer nur kleinen Auslenkung der Sensormasse 120 die elektrostatische Kraft Ft die Sensormasse 120 zu einer großen Auslenkung verstärkt. Da dies zu einer sofortigen Übersteuerung der Sensormasse 120 führen kann, sollte der Beschleunigungssensor 100 in dieser Weise nur mit zusätzlicher Rückstellelektronik in einem geschlossenen Regelkreis betrieben werden.

Der Beschleunigungssensor 100 weist zusätzlich Sensorelektroden 160 zum Auslesen der Beschleunigung, die mit der Sensormasse 120 verbunden sind und denen schematisch dargestellte Detektionselektroden 170 zugeordnet sind, die mit dem Substrat 110 verbunden sind. Eine Spannung zwischen den Sensorelektroden 160 und den Detektionselektroden 170 erzeugt eine elektrostatische Kraft Fd auf die Sensormasse 120, die dazu verwendet werden kann, die Sensormasse 120 auszulenken. Für eine feste Spannung zwischen Sensorelektroden 160 und Detektionselektroden 170 ist die Ladung bzw. eine daraus ableitbare Kapazität von der Auslenkung der Sensormasse 120 entlang der Bewegungsachse x abhängig. Dies ermöglicht es, die Auslenkung der Sensormasse 120 über die Sensorelektroden 160 und die Detektionselektroden 170 zu bestimmen.

Wenn sich die Sensormasse 120 in Ruhe befinden soll, müssen sich die verschiedenen auf sie wirkenden Kräften ausgleichen, d.h. Fd + Ft + Ff = 0. Fasst man die erste elektrostatische Kraft Fd als die von dem Beschleunigungssensor 100 gemessene Kraft und die Kombination der Federkraft Ff und der zweiten elektrostatischen Kraft Ft als effektive Federkraft auf, so ergibt sich für kleine Auslenkungen ein linearer Zusammenhang zwischen der ersten elektrostatischen Kraft und der Auslenkung, dessen Steigung von der anliegenden Trimmspannung abhängt.

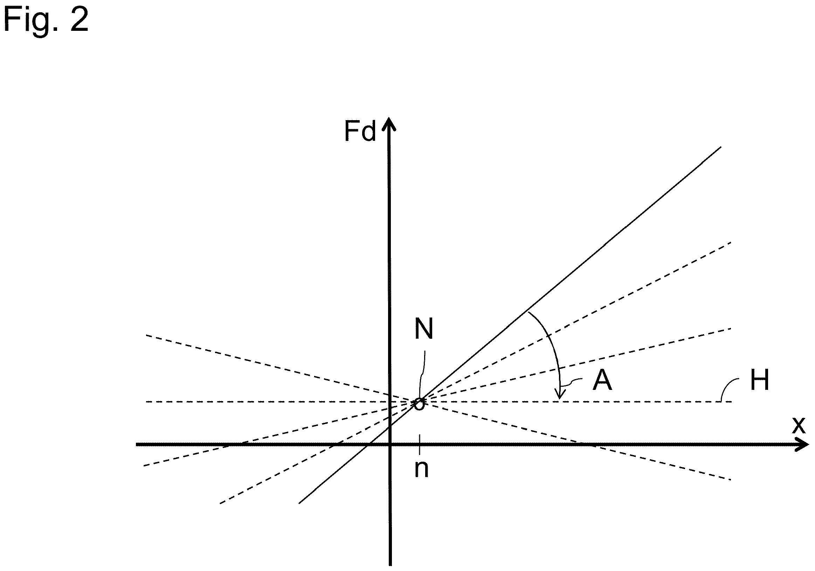

Dies ist schematisch in der Fig. 2 gezeigt, die für verschiedene Trimmspannungen Graphen für die Abhängigkeit der ersten elektrostatischen oder effektiv gemessenen Kraft Fd von der Auslenkung entlang der Bewegungsachse x angibt. Jeder der Geraden stellt hierbei eine Kraft-Weg-Kennlinie des Systems für eine bestimmte Trimmspannung dar. Diese Kennlinien können für jeweils eine bestimmte Trimmspannung durch Einstellen verschiedener von den Detektionselektroden 170 auf die Sensorelektroden 160 ausgeübte Kräfte und anschließendes Auslesen der resultierenden Auslenkungen bestimmt werden.

Führt man diese Messung mindestens zweimal für verschiedene Trimmspannungen durch, erhält man als Schnittpunkt aller Geraden den Punkt N im Diagramm, in dem die erste elektrostatische Kraft Fd für sämtliche Trimmspannungen zur gleichen Auslenkung "n" führt. Diese Auslenkung wird als "neutraler Punkt" bezeichnet.

Durch entsprechende Variation der Trimmspannung und der Spannungen zwischen den Sensorelektroden 160 und den Detektionselektroden 170 kann in dem Beschleunigungssensor 100 der neutrale Punkt für die Auslenkung ermittelt und als Ausgangspunkt für Beschleunigungsmessungen angestrebt werden. Veränderungen der Trimmspannung haben in diesem Punkt keinen Einfluss auf die auf die Sensormasse 120 wirkenden Kräfte. Ein auf die Beschleunigungsmessung wirkender Bias ist also gegenüber derartigen Veränderungen stabil, wodurch sich die Verlässlichkeit des Sensors bei langen Laufzeiten erhöht. Bringt man die Sensormasse 120 also in eine Ausgangslage, die dem neutralen Punkt angenähert ist oder diesem entspricht, so lässt sich die Biasstabilität erhöhen.

Zudem kann nachdem die Ausgangslage der Sensormasse dem neutralen Punkt angenähert oder dieser eingenommen wurde, die Trimmspannung derart geändert werden, dass die zweite elektrostatische Kraft Ft die Federkraft Ff teilweise oder sogar vollständig kompensiert. Dies ist in der Fig. 2 durch den Pfeil A gekennzeichnet. Die Trimmspannung wird also solange verändert, bis im Kraft-Weg-Diagramm (nahezu) der steigungslose, d.h. horizontale Graph H erreicht ist. Für eine derartige Konfiguration ist der Bias auch gegenüber kleinen Verschiebungen aus dem neutralen Punkt heraus stabil, da keine Veränderung der auf die Sensormasse 120 wirkenden Kräfte auftritt. Auch dies erhöht die Langzeitstabilität und kann zudem für den Betrieb des Beschleunigungssensors 100 unter Vibration vorteilhaft sein.

Sowohl die Einstellung der Auslenkung bezüglich des neutralen Punkts als auch die Einstellung einer die Federkraft Ff vollständig oder teilweise kompensierenden Trimmspannung können hierbei durch automatische Regelung der an die Trimmelektroden 140, 150, die Sensorelektroden 160 und die Detektionselektroden 170 angelegten Spannungen erreicht werden. Hierdurch ist es möglich, den Beschleunigungssensor 100 im neutralen Punkt zu halten und den Bias weiter zu stabilisieren. Zudem kann die Regelung Daten bezüglich einer zeitlichen Veränderung der Lage des neutralen Punktes liefern, die Aufschluss über die Funktionstüchtigkeit des Beschleunigungssensors 100 liefern können.

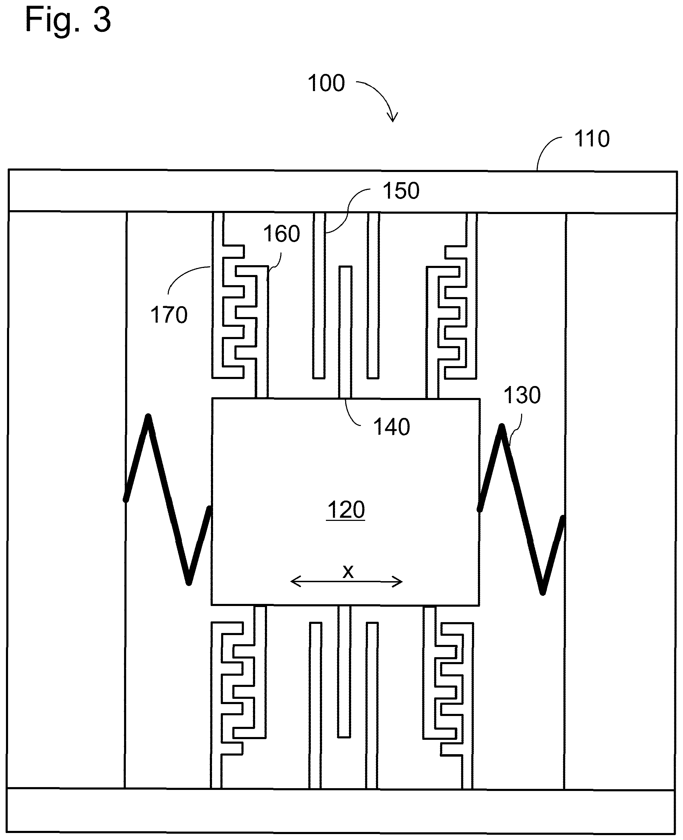

Es versteht sich hierbei von selbst, dass je nach konkreter Ausgestaltung der Trimmelektroden 140, 150, der Sensorelektroden 160 und der Detektionselektroden 170 die erste elektrostatische Kraft Fd, die zweite elektrostatische Kraft Ft und die Auslenkung der Sensormasse 120 auf unterschiedliche Arten erzeugt und ausgelesen werden können. Eine konkrete Möglichkeit hierfür soll beispielhaft anhand des in der Fig. 3 schematisch dargestellten Beschleunigungssensors 100 diskutiert werden.

Im dem Beschleunigungssensor 100 der Fig. 3 sind die ersten Trimmelektroden 140 als Elektrodenplatten ausgebildet, die von jeweils zwei zweiten Trimmelektroden 150 eingefasst werden und mit diesen Plattenkondensatoren bilden. Die zweite elektrostatische Kraft ist hierbei die Resultierende der von den beiden äußeren zweiten Trimmelektroden 150 auf die mittlere erste Trimmelektrode 140 wirkenden Kräfte. Für eine mittige Positionierung der ersten Trimmelektroden 140 ist diese also kräftefrei.

Die Sensorelektroden 160 und die Detektionselektroden 170 sind als Kammelektroden mit ineinander eingreifenden Elektrodenfingern ausgebildet. Die Sensorelektroden 160 und die Detektionselektroden 170 sind entlang der Bewegungsachse x in zwei Gruppen von Paarungen getrennt. In der Fig. 3 stellen die am linken Ende der Sensormasse angeordneten Elektroden die erste Paarung dar, während die am rechten Ende angeordneten Elektroden die zweite Paarung darstellen.

Legt man nun eine vorgegebene Spannung nur an eine der beiden Paarungsgruppen an, resultiert eine nur auf die Elektroden dieser Paarungen zurückgehende Kraft. Wechselt man alternierend die Gruppe von Paarungen, an die Spannung angelegt ist, so hängt die resultierende erste elektrostatische Kraft davon ab, wie lange welche Paarungsgruppe mit der Spannung beaufschlagt ist. Hierbei empfiehlt sich ein rascher Wechsel, um Trägheitseffekte bzw. Hystereseeffekte möglichst zu unterdrücken. Das Tastverhältnis für das Wechseln der Spannung von der einen zu der anderen Paarungsgruppe bestimmt also darüber, ob und in welche Richtung sich die erste elektrostatische Kraft im zeitlichen Mittel ausbildet.

Im Beispiel der Fig. 3 sind die Paarungen von Sensorelektroden 160 und Detektionselektroden 170 baugleich. Das Anlegen einer vorgegebenen Spannung nur an die linken Paarungen führt also zu einer entgegengesetzten Kraft als das Anlegen der vorgegebenen Spannung nur an die rechten Paarungen. Legt man die Spannung während eines Referenzzeitraums gleich oft links und rechts an, d.h. stellt man ein Tastverhältnis von 50/50 ein, so resultiert im zeitlichen Mittel keine Kraft. Durch Variation des Tastverhältnisses ist es dann möglich, die im zeitlichen Mittel auf die Sensormasse 120 wirkende erste elektrostatische Kraft einzustellen. Die tatsächliche Kraft hängt hierbei natürlich von der konkreten Struktur des Sensors ab und kann berechnet werden. Das von außen vorgebbare Tastverhältnis erlaubt es also, die erste elektrostatische Kraft von außen vorzugeben.

Gleichzeitig kann aus der bei Anlegen der vorgegebenen Spannung auf die Elektroden strömenden Ladung die Kapazität der von den Elektroden gebildeten Kondensatoren in an sich bekannter Weise bestimmt werden, z.B. durch Messung des Ladungsflusses über Masse und einen Verstärkerkondensator. Für die linke Gruppe von Paarungen der Fig. 3 ergibt sich hierbei ebenso ein Wert wie für die rechte Gruppe von Paarungen. Da die Kapazitäten vom Abstand der jeweiligen Elektroden zueinander abhängen, sind sie ein Maß für die Auslenkung der Sensormasse 120. Der Kapazitätsunterschied zwischen den linken und den rechten Paarungen kann also ausgelesen werden. Hieraus lässt sich dann die Auslenkung der Sensormasse 120 bestimmen.

Auf diese Weise ist es also möglich, die Messwerte zu bestimmen, die dazu notwendig sind, für jede angelegte Trimmspannung einen Kraft-Weg-Graphen und daraus den neutralen Punkt herzuleiten.

Alternativ kann auch auf die Ableitung der ersten elektrostatischen Kraft aus dem Tastverhältnis und der Auslenkung aus dem Kapazitätsunterschied verzichtet und diese Größen direkt für die Einstellung des neutralen Punkts verwendet werden.

Dazu werden für jeweils eine Trimmspannung verschiedene Tastverhältnisse angelegt und für jedes Tastverhältnis der entsprechende Kapazitätsunterschied gemessen. Die daraus resultierenden Tastverhältnis-Kapazitätsunterschied-Graphen schneiden sich in einem Punkt, in dem ein Tastverhältnis für jede Trimmspannung zu dem gleichen Kapazitätsunterschied führt. Einstellen bezüglich dieses Kapazitätsunterschieds entspricht dann dem Einstellen der Auslenkung bezüglich des neutralen Punkts. Auf diese Weise kann der neutrale Punkt mittels direkt einstellbarer bzw. auslesbarer Parameter bestimmt und die Auslenkung der Sensormasse (120) dem neutralen Punkt angenähert oder vorzugsweise auf diesen eingestellt werden. Es ist insbesondere möglich, auf den Kapazitätsunterschied zu regeln.

Auf diese Art kann in einfacher Weise der neutrale Punkt erreicht und gehalten werden.

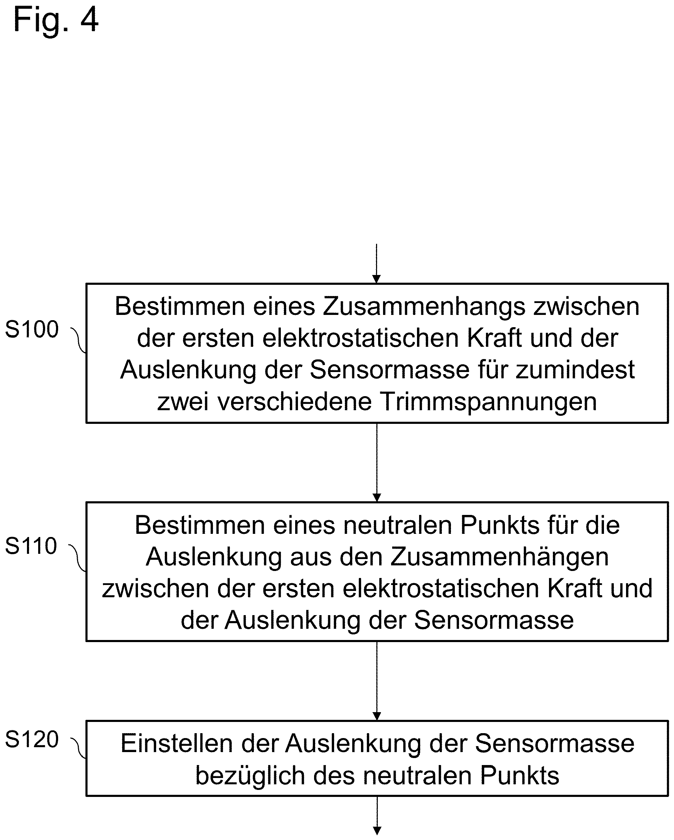

Die Fig. 4 zeigt ein schematisches Ablaufdiagram für ein Verfahren zum Einstellen des neutralen Punktes, das mit einem Beschleunigungssensor ausgeführt werden kann, der gleichwertig zu den oben beschriebenen Sensoren aufgebaut ist.

Bei S 100 wird ein Zusammenhang zwischen der ersten elektrostatischen Kraft Fd und der Auslenkung der Sensormasse (120) für zumindest zwei verschiedene Trimmspannungen bestimmt. Insbesondere können für zwei oder mehrere Trimmspannungen lineare Kraft-Weg-Graphen bestimmt werden.

Bei S110 wird aus den Zusammenhängen zwischen der ersten elektrostatischen Kraft Fd und der Auslenkung der Sensormasse (120) ein neutraler Punkt für die Auslenkung bestimmt, in der für die verschiedenen Trimmspannungen die jeweiligen ersten elektrostatischen Kräfte Fd gleich sind. Dieser neutrale Punkt kann insbesondere aus dem Schnittpunkt der ermittelten Kraft-Weg-Graphen bestimmt werden.

Bei S 120 wird die Auslenkung der Sensormasse bezüglich des neutralen Punkts eingestellt. Insbesondere wird die Auslenkung in die Nähe des neutralen Punkts oder vorzugsweise auf den neutralen Punkt eingestellt. Hierdurch wird ein Betrieb des Beschleunigungssensors an einem Arbeitspunkt mit erhöhter Langzeitstabilität des Bias ermöglicht.

## Patentansprüche

1. Beschleunigungssensor (100), mit

einer Sensormasse (120), die mittels Federelementen (130) entlang einer Bewegungsachse (x) beweglich über einem Substrat (110) gelagert ist;
ersten Trimmelektroden (140), die mit der Sensormasse (120) verbunden sind;
Sensorelektroden (160), die mit der Sensormasse (120) verbunden sind;
zweiten Trimmelektroden (150), die mit dem Substrat (110) verbunden sind und den ersten Trimmelektroden (140) zugeordnet sind;
Detektionselektroden (170), die mit dem Substrat (110) verbunden sind und die den Sensorelektroden (160) zugeordnet sind, wobei
die Sensorelektroden (160) und die Detektionselektroden (170) eingerichtet sind, durch eine angelegte Spannung die Sensormasse (120) entlang der Bewegungsachse (x) auszulenken und die Auslenkung und eine erste elektrostatische Kraft (Fd) zu messen, die von den Sensorelektroden (160) und den Detektionselektroden (170) auf die Sensormasse (120) ausgeübt wird, um einen Zusammenhang zwischen der ersten elektrostatischen Kraft (Fd) und der Auslenkung der Sensormasse (120) zu bestimmen;
die Federelemente (130) eingerichtet sind, bei Auslenkung der Sensormasse (120) entlang der Bewegungsachse (x) eine Federkraft (Ff) auf die Sensormasse (120) zu erzeugen;

der Beschleunigungssensor (100) eingerichtet ist, durch Anlegen einer elektrischen Trimmspannung zwischen den ersten Trimmelektroden (140) und den zweiten Trimmelektroden (150) eine zweite elektrostatische Kraft (Ft) auf die Sensormasse (120) zu erzeugen, die sich der Federkraft (Ff) zu einer effektiven Federkraft aufaddiert; die Sensorelektroden (160) und die Detektionselektroden (170) eingerichtet sind, für zumindest zwei verschiedene Trimmspannungen den jeweiligen Zusammenhang zwischen der ersten elektrostatischen Kraft und der Auslenkung der Sensormasse (120) zu bestimmen wird und daraus einen neutralen Punkt für die Auslenkung zu bestimmen wird, bei der für die verschiedenen Trimmspannungen die jeweiligen ersten elektrostatischen Kräfte gleich sind; und

der Beschleunigungssensor (100) eingerichtet ist, die an den ersten Trimmelektroden (140), den zweiten Trimmelektroden (150), den Sensorelektroden (160) und/oder den Detektionselektroden (170) anliegenden Spannungen derart einzustellen, dass die Auslenkung der Sensormasse von den Sensorelektroden (160) und den Detektionselektroden (170) bezüglich des neutralen Punkts eingestellt wird.

2. Beschleunigungssensor (100) nach Anspruch 1, wobei
nach dem Einstellen der Auslenkung bezüglich des neutralen Punkts die Trimmspannung derart eingestellt wird, dass die zweite elektrostatische Kraft die Federkraft teilweise oder vollständig kompensiert.

3. Beschleunigungssensor (100) nach einem der vorherigen Ansprüche, wobei

die Sensorelektroden (160) und die Detektionselektroden (170) in erste Paarungen von Sensorelektroden (160) und Detektionselektroden (170) und zweite Paarungen von Sensorelektroden (160) und Detektionselektroden (170) aufgeteilt sind;
die ersten Paarungen und die zweiten Paarungen entlang der Bewegungsachse (x) an verschiedenen Positionen angeordnet sind;
eine vorgegebene Spannung mit einem Tastverhältnis abwechselnd an die Sensorelektroden (160) und Detektionselektroden (170) der ersten Paarungen und die Sensorelektroden (160) und Detektionselektroden (170) der zweiten Paarungen angelegt wird; und
durch die Änderung des Tastverhältnisses die erste elektrostatische Kraft geändert werden kann.

4. Beschleunigungssensor (100) nach Anspruch 3, wobei

während die vorgegebene Spannung an die jeweiligen Sensorelektroden (160) und Detektionselektroden (170) angelegt ist, eine Kapazität der von den Sensorelektroden (160) und Detektionselektroden (170) gebildeten Kondensatoren bestimmt wird;
die Auslenkung der Sensormasse (120) über einen Kapazitätsunterschied zwischen den ersten Paarungen von Sensorelektroden (160) und Detektionselektroden (170) und den zweiten Paarungen von Sensorelektroden (160) und Detektionselektroden (170) bestimmt wird; und
der Zusammenhang zwischen der ersten elektrostatischen Kraft und der Auslenkung über den Zusammenhang zwischen dem anliegenden Tastverhältnis und dem Kapazitätsunterschied bestimmt wird.

5. Beschleunigungssensor (100) nach Anspruch 4, wobei

für jeweils eine Trimmspannung das Tastverhältnis verändert wird und für jedes Tastverhältnis der Kapazitätsunterschied bestimmt wird; und
um die Auslenkung bezüglich des neutralen Punkts einzustellen, das Tastverhältnis derart eingestellt wird, dass für jede der verschiedenen Trimmspannungen der gleiche Kapazitätsunterschied auftritt.

6. Beschleunigungssensor (100) nach einem der vorherigen Ansprüche, wobei
an den ersten Trimmelektroden (140), den zweiten Trimmelektroden (150), den Sensorelektroden (160) und/oder den Detektionselektroden (170) anliegende Spannungen durch einen Regelkreis automatisch derart eingestellt werden, dass die Auslenkung bezüglich des neutralen Punkts geregelt wird.

7. Beschleunigungssensor (100) nach einem der vorherigen Ansprüche, wobei
an den ersten Trimmelektroden (140) und den zweiten Trimmelektroden (150) anliegende Spannungen durch einen Regelkreis automatisch derart eingestellt werden, dass die zweite elektrostatische Kraft die Federkraft teilweise oder vollständig kompensiert.

8. Beschleunigungssensor (100) nach einem der vorherigen Ansprüche, wobei

das Einstellen der Sensormasse (120) bezüglich des neutralen Punkts ein Annähern der Auslenkung der Sensormasse (120) an den neutralen Punkt oder ein Einstellen der Auslenkung der Sensormasse (120) auf den neutralen Punkt ist.

9. Verfahren zum Einstellen der Auslenkung der Sensormasse (120) eines Beschleunigungssensors (100) nach einem der vorherigen Ansprüche, umfassend:

Anlegen von Spannungen an die ersten Trimmelektroden (140), die zweiten Trimmelektroden (150), die Sensorelektroden (160) und/oder die Detektionselektroden (170 des Beschleunigungssensors (100);
Bestimmen des jeweiligen Zusammenhangs zwischen der ersten elektrostatischen Kraft (Fd) und der Auslenkung der Sensormasse (120) für zumindest zwei verschiedene Trimmspannungen;
Bestimmen eines neutralen Punkts für die Auslenkung (n), bei der für die verschiedenen Trimmspannungen die jeweiligen ersten elektrostatischen Kräfte gleich sind, aus den Zusammenhängen zwischen der ersten elektrostatischen Kraft (Fd) und der Auslenkung (n) der Sensormasse (120); und
Einstellen der an den ersten Trimmelektroden (140), den zweiten Trimmelektroden (150), den Sensorelektroden (160) und/oder den Detektionselektroden (170) anliegenden Spannungen derart, dass die Auslenkung der Sensormasse (120) bezüglich des neutralen Punkts eingestellt wird.

**Claims**

1. An accelerometer (100), comprising:

a sensor mass (120) which is mounted over a substrate (110) by means of spring elements (130) so as to be movable along a movement axis (x);
first trim electrodes (140) which are connected to the sensor mass (120);
sensor electrodes (160) which are connected to the sensor mass (120);
second trim electrodes (150) which are connected to the substrate (110) and are assigned to the first trim electrodes (140);
detection electrodes (170) which are connected to the substrate (110) and are assigned to the sensor electrodes (160), wherein
the sensor electrodes (160) and the detection electrodes (170) are configured to deflect the sensor mass (120) along the movement axis (x) by an applied voltage and to measure the deflection and a first electrostatic force (Fd) that is exerted on the sensor mass (120) by the sensor electrodes (160) and the detection electrodes (170) in order to determine a relationship between the first electrostatic force (Fd) and the deflection of the sensor mass (120);
in deflecting the sensor mass (120) along the movement axis (x), the spring elements (130) are configured to generate a spring force (Ff) acting on the sensor mass (120);
the accelerator (100) is configured, by applying an electrical trim voltage between the first trim electrodes (140) and the second trim electrodes (150), to generate a second electrostatic force (Ft) acting on the sensor mass (120) which is added to the spring force (Ff) to become an effective spring force;
the sensor electrodes (160) and the detection electrodes (170) are configured to determine the particular relationship between the first electrostatic force and the deflection of the sensor mass (120) for at least two different trim voltages and to determine therefrom a neutral point for the deflection where the respective first electrostatic forces are equal for the different trim voltages; and
the accelerator (100) is configured to adjust the voltages applied to the first trim electrodes (140), the second trim electrodes (150), the sensor electrodes (160) and/or the detection electrodes (170) in such a manner that the deflection of the sensor mass is set by the sensor electrodes (160) and the detection electrodes (170) with respect to the neutral point.

2. The accelerometer (100) according to claim 1, wherein
after the deflection has been set with respect to the neutral point, the trim voltage is adjusted in such a manner that the second electrostatic force partially or fully compensates for the spring force.

3. The accelerometer (100) according to any one of the preceding claims, wherein

the sensor electrodes (160) and the detection electrodes (170) are divided into first pairings of sensor electrodes (160) and detection electrodes (170) and second pairings of sensor electrodes (160) and detection electrodes (170);

the first pairings and the second pairings are arranged at different positions along the movement axis (x);

a predetermined voltage with a duty cycle is alternatingly applied to the sensor electrodes (160) and detection electrodes (170) of the first pairings and the sensor electrodes (160) and detection electrodes (170) of the second pairings; and

the first electrostatic force can be changed by changing the duty cycle.

4. The accelerometer (100) according to claim 3, wherein

a capacitance of the capacitors formed by the sensor electrodes (160) and detection electrodes (170) is determined, while the predetermined voltage is applied to the respective sensor electrodes (160) and detection electrodes (170);

the deflection of the sensor mass (120) is determined via a difference in capacitance between the first pairings of sensor electrodes (160) and detection electrodes (170) and the second pairings of sensor electrodes (160) and detection electrodes (170); and

the relationship between the first electrostatic force and the deflection is determined via the relationship between the present duty cycle and the difference in capacitance.

5. The accelerometer (100) according to claim 4, wherein

the duty cycle is, in each case, changed for a trim voltage, and the difference in capacitance is determined for each duty cycle; and

in order to set the deflection with respect to the neutral point, the duty cycle is set in such a manner that the same difference in capacitance occurs for each of the different trim voltages.

6. The accelerometer (100) according to any one of the preceding claims, wherein voltages applied to the first trim electrodes (140), the second trim electrodes (150), the sensor electrodes (160) and/or the detection electrodes (170) are automatically adjusted by a control loop in such a manner that the deflection is controlled with respect to the neutral point.

7. The accelerometer (100) according to any one of the preceding claims, wherein
voltages applied to the first trim electrodes (140) and the second trim electrodes (150) are automatically adjusted by a control loop in such a manner that the second electrostatic force partially or fully compensates for the spring force.

8. The accelerometer (100) according to any one of the preceding claims, wherein
setting the sensor mass (120) with respect to the neutral point is an approximation of the deflection of the sensor mass (120) to the neutral point or setting the deflection of the sensor mass (120) to the neutral point.

9. A method for setting the deflection of the sensor mass (120) of an accelerometer (100) according to any one of the preceding claims, comprising:

applying voltages to the first trim electrodes (140), the second trim electrodes (150), the sensor electrodes (160) and/or the detection electrodes (170) of the accelerometer (100);

determining the particular relationship between the first electrostatic force (Fd) and the deflection of the sensor mass (120) for at least two different trim voltages;

determining a neutral point for the deflection (n) where the respective first electrostatic forces are equal for the different trim voltages from the relationships between the first electrostatic force (Fd) and the deflection (n) of the sensor mass (120); and

adjusting the voltages applied to the first trim electrodes (140), the second trim electrodes (150), the sensor electrodes (160) and/or the detection electrodes (170) in such a manner that the deflection of the sensor mass (120) is set with respect to the neutral point.

**Revendications**

1. Capteur d'accélération (100) comprenant

une masse de capteur (120) qui est supportée au moyen d'éléments de ressort (130) de manière mobile le long d'un axe de déplacement (x) au-dessus d'un substrat (110) ;

de premières électrodes d'ajustement (140) qui sont reliées à la masse de capteur (120) ;

des électrodes de capteur (160) qui sont reliées à la masse de capteur (120) ;

de secondes électrodes d'ajustement (150) qui sont reliées au substrat (110) et sont associées aux premières électrodes d'ajustement (140) ;

des électrodes de détection (170) qui sont reliées au substrat (110) et qui sont associées aux électrodes de capteur (160), dans lequel

les électrodes de capteur (160) et les électrodes de détection (170) sont configurées pour dévier la masse de capteur (120) le long de l'axe de déplacement (x) par une tension appliquée et mesurer la déviation et une première force électrostatique (Fd) qui est exercée par les électrodes de capteur (160) et les électrodes de détection (170) sur la masse de capteur (120) afin de déterminer une relation entre la première force électrostatique (Fd) et la déviation de la masse de capteur (120) ;

les éléments de ressort (130) sont configurés pour générer une force de ressort (Ff) sur la masse de capteur (120) à la déviation de la masse de capteur (120) le long de l'axe de déplacement (x) ;

le capteur d'accélération (100) est configuré pour générer par application d'une tension d'ajustement électrique entre les premières électrodes d'ajustement (140) et les secondes électrodes d'ajustement (150) une seconde force électrostatique (Ft) sur la masse de capteur (120), qui s'additionne à la force de ressort (Ff) en une force de ressort effective ;

les électrodes de capteur (160) et les électrodes de détection (170) sont configurées pour déterminer pour au moins deux tensions d'ajustement différentes la relation respective entre la première force électrostatique et la déviation de la masse de capteur (120) et déterminer à partir de celle-ci un point neutre pour la déviation, à laquelle pour les tensions d'ajustement différentes les premières forces électrostatiques respectives sont identiques ; et

le capteur d'accélération (100) est configuré pour régler les tensions s'appliquant aux premières électrodes d'ajustement (140), aux secondes électrodes d'ajustement (150), aux éléments de capteur (160) et/ou aux électrodes de détection (170) de manière telle que la déviation de la masse de capteur soit réglée par les électrodes de capteur (160) et les électrodes de détection (170) par rapport au point neutre.

2.  Capteur d'accélération (100) selon la revendication 1, dans lequel

après le réglage de la déviation par rapport au point neutre, la tension d'ajustement est réglée de telle manière que la seconde force électrostatique compense partiellement ou complètement la force de ressort.

3.  Capteur d'accélération (100) selon l'une des revendications précédentes, dans lequel

les électrodes de capteur (160) et les électrodes de détection (170) sont divisées en de premiers appariements d'électrodes de capteur (160) et d'électrodes de détection (170) et de seconds appariements d'électrodes de capteur (160) et d'électrodes de détection (170) ;

les premiers appariements et les seconds appariements sont agencés en différentes positions le long de l'axe de déplacement (x) ;

une tension prédéterminée est appliquée avec un rapport d'impulsions à tour de rôle aux électrodes de capteur (160) et aux électrodes de détection (170) des premiers appariements et aux électrodes de capteur (160) et aux éléments de détection (170) des seconds appariements ; et

la première force électrostatique peut être modifiée par la modification du rapport d'impulsions.

4.  Capteur d'accélération (100) selon la revendication 3, dans lequel

pendant que la tension prédéterminée est appliquée aux électrodes de capteur (160) et électrodes de détection (170) respectives, une capacité des condensateurs formés par les électrodes de capteur (160) et les électrodes de détection (170) est déterminée ;

la déviation de la masse de capteur (120) est déterminée par l'intermédiaire d'une différence de capacité entre les premiers appariements d'électrodes de capteur (160) et d'électrodes de détection (170) et les seconds appariements d'électrodes de capteur (160) et d'électrodes de détection (170) ; et

la relation entre la première force électrostatique et la déviation est déterminée par l'intermédiaire de la relation entre le rapport d'impulsions appliqué et la différence de capacité.

5.  Capteur d'accélération (100) selon la revendication 4, dans lequel

à chaque fois, pour une tension d'ajustement, le rapport d'impulsions est modifié et la différence de capacité est déterminée pour chaque rapport d'impulsions ; et
afin de régler la déviation par rapport au point neutre, le rapport d'impulsions est réglé de telle manière que la même différence de capacité survienne pour chacune des différentes tensions d'ajustement.

6. Capteur d'accélération (100) selon l'une des revendications précédentes, dans lequel
des tensions s'appliquant aux premières électrodes d'ajustement (140), aux secondes électrodes d'ajustement (150), aux électrodes de capteur (160) et/ou aux électrodes de détection (170) sont automatiquement réglées par un circuit de régulation de telle manière que la déviation par rapport au point neutre soit régulée.

7. Capteur d'accélération (100) selon l'une des revendications précédentes, dans lequel
des tensions s'appliquant aux premières électrodes d'ajustement (140) et aux secondes électrodes d'ajustement (150) sont automatiquement réglées par un circuit de régulation de telle manière que la seconde force électrostatique compense partiellement ou complètement la force de ressort.

8. Capteur d'accélération (100) selon l'une des revendications précédentes, dans lequel
le réglage de la masse de capteur (120) par rapport au point neutre est une approximation de la déviation de la masse de capteur (120) du point neutre ou est un réglage de la déviation de la masse de capteur (120) sur le point neutre.

9. Procédé de réglage de la déviation de la masse de capteur (120) d'un capteur d'accélération (100) selon l'une des revendications précédentes, comprenant :

appliquer des tensions aux premières électrodes d'ajustement (140), aux secondes électrodes d'ajustement (150), aux électrodes de capteur (160) et/ou aux électrodes de détection (170) du capteur d'accélération (100) ;
déterminer la relation respective entre la première force électrostatique (Fd) et la déviation de la masse de capteur (120) pour au moins deux tensions d'ajustement différentes ;
déterminer à partir des relations entre la première force électrostatique (Fd) et la déviation (n) de la masse de capteur (120) un point neutre pour la déviation (n), à laquelle pour les tensions d'ajustement différentes les premières forces électrostatiques respectives sont identiques ; et
régler les tensions s'appliquant aux premières électrodes d'ajustement (140), aux secondes électrodes d'ajustement (150), aux électrodes de capteur (160) et/ou aux éléments de détection (170) de telle manière que la déviation de la masse de capteur (120) soit réglée par rapport au point neutre.

## Fig. 1

EP 3 980 793 B1

Fig. 2

Fig. 3

## Fig. 4

S100 — Bestimmen eines Zusammenhangs zwischen der ersten elektrostatischen Kraft und der Auslenkung der Sensormasse für zumindest zwei verschiedene Trimmspannungen

S110 — Bestimmen eines neutralen Punkts für die Auslenkung aus den Zusammenhängen zwischen der ersten elektrostatischen Kraft und der Auslenkung der Sensormasse

S120 — Einstellen der Auslenkung der Sensormasse bezüglich des neutralen Punkts

**IN DER BESCHREIBUNG AUFGEFÜHRTE DOKUMENTE**

**In der Beschreibung aufgeführte Patentdokumente**

- WO 2015052487 A1
- WO 2016120319 A1
- JP 2000180180 A
- US 20050001275 A1